# EUROPEAN PATENT SPECIFICATION

(11) **EP 2 069 570 B1**
(45) Date of publication and mention of the grant of the patent: **20.11.2013**
(21) Application number: 07826641.8
(22) Date of filing: 03.10.2007
(51) Int. Cl.: D06M 23/12, B01J 13/22

(54) **PROCESSES FOR THE FORMATION OF AGGLOMERATES OF MICROCAPSULES OF PHASE CHANGE MATERIALS (PCM) AND APPLICATION IN FIBROUS OR POROUS POLYMERIC MATERIALS**
VERFAHREN ZUR HERSTELLUNG VON AGGLOMERATEN AUS MIKROKAPSELN MIT LATENTWÄRMESPEICHERMATERIALIEN (PCM) UND ANWENDUNG BEI FASERHALTIGEN ODER PORÖSEN POLYMEREN MATERIALIEN
PROCÉDÉS DE FABRICATION DES AGGLOMÉRATS DE MICROCAPSULES DE MATÉRIAUX À CHANGEMENT DE PHASE (PCM) ET APPLICATION DANS DES MATÉRIAUX POLYMÈRES FIBREUX OU POREUX

(30) Priority: 03.10.2006 PT 10357606
(43) Date of publication of application: 17.06.2009
(73) Proprietor: Devan-Micropolis SA, 4470-605 Moreira da Maia (PT)
(72) Inventor: NAYLOR ROCHA GOMES, Jaime Isidoro, 4710-187 Braga (PT); MAGALHÃES VAZ VIEIRA, Raquel Maria, 4835-352 Guimarães (PT); DA SILVA RIBEIRO, André Filipe, 4835-425 Guimarães (PT); PINTO CERQUEIRA BARROS, Sandra Maria, 4700-215 Braga (PT)
(74) Representative: Cawley, Aimee Elizabeth
(86) International application number: PCT/IB2007/054024
(87) International publication number: WO 2008/041191

(56) References cited:
- WO-A-2005/018795
- WO-A-2006/013165
- WO-A-2006/117702
- US-A- 5 851 338

## Description

### Field of the Invention

The present invention refers to processes to obtain agglomerates of microcapsules of phase change materials, linked to each other by chemical bonds and application in articles made of fibres or fibrous or porous polymeric materials.

### Summary of the Invention

This invention refers to agglomerates of microcapsules obtained from microcapsules of phase change materials (PCM) and their application in fibrous or porous polymeric materials, particularly textile articles, footwear or upholstery, with the capacity for temperature regulation.

PCM Microcapsules are connected to each other by chemical bonds forming agglomerates, which bind directly to the fibres or in the pores without the need for the addition of a binder, when applied to the polymeric fibrous or porous materials.

The fixation on the fibres occurs by reacting the microcapsules and the functional groups after the individual insertion of the microcapsules between the fibres or inside the pores of other materials, such as leather or polymeric films.

The articles that contain these agglomerates have better mechanical resistance to washing since this procedure allows the incorporation of a suitable number of microcapsules that form an larger group than the spaces between the fibres or the pores.

### State of the Art

Clothing articles and footwear have the objective to protect the body from the low exterior temperatures. These articles are therefore formed by insulating materials, such as those made of textile fibres or polymer films, usually porous. Either way, through physical exercise or by a raising of the exterior temperature, these materials heat up the body too much becoming uncomfortable. On the other hand, a sudden lowering of the temperature may occur due to perspiration or to a sudden lowering of the external temperature. In these cases the use of temperature regulating products in the textile material is very useful, being referred to as phase change materials, PCM. Since textile materials require durability to friction and washing it is important, there are several processes disclosed for the use of PCM microcapsules to convey durability, such as the process of mixing PCM microcapsules with a polymeric binder and to make a coating on the textile material with this material. The textile article obtained from this process is described in US5366801. Another embodiment foresees padding the textile, such as a non-woven, with the binder that contains the PCM microcapsules such as referred to in US5851338. These materials are then incorporated in clothing and footwear articles. They can also be incorporated in composite materials such as the ones referred to in US6004662. PCM Microcapsules are made of polymers such as urea-formaldehyde and melamine-formaldehyde.

There are also processes for the use of self-adhesive PCM microcapsules by means of melting the outside wall with the fibres, or the exterior wall of the fibre with the microcapsules. More recently, the patent application no. PT103265 was filled, disclosing a process for de the use of reactive microcapsules or their fixation through binding reactive groups. The articles thus obtained have microcapsules directly connected to the fibre without the need of a polymeric binder avoiding the secondary effects of the binder, such as insulation of the material to body respiration, the harsh handle and the rigidity of the material. However, the number of microcapsules might not be enough.

In the present invention, we suggest binding the microcapsules also with each other under reaction between them through the functional groups after being individually inserted in the materials, and forming bi-dimensional coatings on top of the fibres or tri-dimensional agglomerates, through cross-reaction (reticulation). In the case of agglomerates, they can form a larger group of microcapsules than the spaces between the fibres or, in the case of porous polymers, larger than the inlet to the pores being difficult to remove by friction or washing.

Therefore, while the document PT103265 describes a binding process of PCM microcapsules to the fibres, the present invention refers to binding the microcapsules themselves, which in turn, inside the fibrous or porous material, form agglomerates that remain locked in that material, transmitting in this way to the PCM microcapsules a much greater resistance to washing.

When a binding compound is used in the microcapsules there is the advantage of a bond not only between the microcapsules and the fibres, when reactive microcapsules are used as described in PT103265, but also between the microcapsules themselves, which results in a greater resistance to washing since the microcapsules form a bidimensional net or coating on the fibres, with the subsequent increase of the microcapsule resistance to pressure and to shear forces. On the other hand there can also be formation of tri-dimensional agglomerates that get locked inside pores or between fibres, in polymeric or fibrous materials, respectively, besides bonding with the material itself, which increases the resistance to friction and washing.

There are also processes of application of self-adhesive PCM microcapsules by the hot fusion of the outside wall with the fibres as mentioned in the document WO 2006/117702. In this case, the microcapsules' surplus is applied on the material so that it surrounds the fibres, in the case of textile materials, or enters the pores in the case of polymeric materials, and they are subsequently heated to a temperature above the melting temperature of the outside wall of the microcapsule, so that they fuse together one microcapsule to another so as to form agglomerates surrounding the fibres or bigger than the pores of the materials where they are inserted. In this way their resistance to friction and washing will also be increased.

On the other hand, the document WO0226911 discloses the formation of macro-capsules that differs from the present invention not only with respect to their dimension but also because these macrocapsules are made of microcapsules immersed in a gel, such as alginate, which is subsequently cross-linked with metallic ions and not by chemical reaction between themselves. Furthermore this agglomerate of microcapsules is formed before the application of the microcapsules to the materials, not remaining for this reason locked between the fibres or surrounding the fibres as is proposed in this invention.

### Description of the Invention

A first aspect of the invention provides a process according to claim 1 with optional features set out in claims 2 to 9. A second aspect of the invention provides a use as set out in claim 10.

In order to form microcapsule agglomerates, as the objective of this invention, these should be made of polymer walls of urea-formaldehyde, with terminal carboxylic groups, -COOH, or amine, NH2, or derived from urea such as DMEHU with hydroxyl groups, or polyurethane with functional isocyanate groups. These groups, which are terminal groups, that are present at the end of the molecular chains, will react with the reactive groups of bifunctional binding compounds, thus binding the microcapsules to each other. Microcapsules can also have a second wall made of meathcrylic acid or acrylic acid, such as is referred in the patent PT103265, with carboylic functional groups, -COOH, these groups reacting with the reactive groups of the binding groups, such as glycidyl ether, silane or ethyl chloride, and heterocycles such as dichlorotriazinc.

The reaction of microcapsules of PCM with each other is made possible by the reaction of functional groups present on their walls, such as the said carboxylic, isocyanate, amine, hydroxyl groups with a multifunctional reactive compound that reacts in one end with one microcapsule and in the other end with another microcapsule. In this way the microcapsules of PCM form agglomerates that, once they are inside the textile structure made of fibres, be it yam, woven fabric, knitwear or non-woven, remain locked between the fibres, or surrounding them, assuring a higher resistance against removal by friction or washing. In the case of a reaction occurring also with the fibre, in the case of fibres, such as cellulosic fibres, proteic fibres, polyamide, as claimed in PT103265, the binding of the microcapsules present in the agglomerates will constitute an anchor for these agglomerates to the fibres, making it harder to remove them by friction or washing and increasing in this way the durability of the regulating thermal effect. Should one choose to use mainly the microcapsule with the urea-formaldehyde wall, urea-formaldehyde-glyoxal (DMEHU) or other compounds derived from urea-formaldehyde, melamine-formaldehyde, polyamide, the reaction of the reactive groups present in the binding compounds, between the microcapsules, such as glycidyl ether, silane or ethyl chloride, heterocyles such as diclorotriazine for example, will occur through the reaction of the amine or carboxylic groups of the microcapsule that are free to react because they didn't react with formaldehyde, in the case of formaldehyde polymers, or hydroxyl in the case of DMEHU, and therefore remained free. Should the wall be made of polyurethane, the reaction will take place with terminal isocyanate groups of macromolecular chains. Should the wall be of a polymer of acrylic or methacrylic acid, the reaction will take place with the carboxylic groups.

Polyurethane on the other hand is a material much used for films that are applied as a coating on textile materials, or even as a film itself such as in inner soles for footwear. In the majority of textile and footwear articles the polymer films, namely of polyurethane, are porous. One way of inserting PCM microcapsules in order to provide this material just as the fibres with a temperature regulating effect and simultaneously guaranteeing durability, is by inserting the microcapsules in the pores present in the polyurethane film and then promote the reaction between the PCM microcapsules using binding compounds, as referred to before so that groups consistent and resistant to disintegration are formed, larger than the inlet diameter of the pores, and thus forming agglomerates that are very resistant to washing and friction, since they are locked in the pores.

For this material with functional terminal groups, the microcapsules can still react with these groups through the active binding compounds, thus forming an anchor for the respective agglomerates, increasing immobility and the resistance of these agglomerates to friction and to washing.

There is also the possibility of catalyzing the reaction making it more efficient, by using catalysts such as tertiary amines, much used in the reaction of the isocyanate groups with the hydroxyl group of polyphenols or the methylol group as part of an aliphatic chain that may in this case be part of the binding compound. A frequently used catalyst, DABCO, Diazo-bicyclo-2,2,2-octane and products thereof, have already been referred in the present invention as a catalyst for a different reaction between the fibres and the microcapsules and between them. For other porous polymers, such as PVC and similar, they are applied in he same way.

There are other polymeric porous materials that are natural materials, such as animal skin (leather) and cork, where the same principle can be applied. On animal skins there is still the possibility of the agglomerates anchoring onto the material through bonds formed between functional groups and the multifunctional binding compound that links to the microcapsule agglomerates. The anchorage of the agglomerates onto the material is made by reacting the functional groups of the skins, such as amino groups, thyol (SH) or carboxylic.

The process of insertion of the microcapsules can be by padding the material, be it a woven or knitted fabric or a film of polymer such as polyurethane, through its immersion in an emulsion of PCM microcapsules, and then carrying it through squeezing rollers that will remove the excess liquid. This machine can be the one that is used normally in the textile industry for finishing purposes, referred to as 'foulard'. The material goes then through a drying oven where the reaction is promoted by the temperature of drying. This is a process that in the dyeing of reactive dyes is referred to as 'Pad-Fix'. The reaction is in this case pH and temperature dependent. For different reactive groups the conditions are different, namely with respect to pH, varying from neutral or slightly acid when diglycidyl ether is used as the binding group between the microcapsules. As for the temperature, since the process is usually continuous, temperature should be between 40 and 150°C, depending on the speed of the passage of the material through the oven, normally known in the finishing textile companies as a 'stenter'.

The reaction can also de done in the cold, leaving the material to rest for a period of time between 8 to 24 hours. This is a process known in textile finishing as 'Pad-batch'. The bridging reactive compound between the microcapsules can be applied simul-taneously with the microcapsules, as part of the emulsion, or separately.

Another application process is by spraying the aqueous emulsion of microcapsules on the material and then drying it and cross-binding in an oven.

Another processes much used for textile materials, is a process referred to as 'exhaustion', wherein the microcapsules are transferred from an aqueous bath to the interior of the textile materials, namely yarns, knitted or woven fabrics, by an initial process of absorption and subsequently diffusion, caused by the movement of the material and the aqueous bath, and by heating the bath for a period of time and a pH appropriate to the reaction, normally alkaline, they will react with each other and stay locked inside the material. The machines normally used for the textile exhaust dyeing and finishing of knitwear and woven fabric are called 'jet'. The same process can be applied to the already made garment in garment dyeing and finishing machines. In these machines the process is more efficient since there is a greater movement of the garment and of the finishing bath, forcing the microcapsules into the textile material, that makes up the made garment, be it a shirt, trousers, blouses, socks or any other type of article.

Phase change materials, PCM, are materials that change phases from solid to liquid and from liquid to solid, having the characteristic of absorbing great quantities of energy when changing from solid to liquid and releasing great quantities of energy when changing from liquid to solid. Their characteristics of energy retention, are also useful for the self-regulation of the temperature within pre-defined limits, such as for example to convey comfort to whom wears winter clothes and footwear. Normally the change in phase for these applications varies between 16 and 36°C, depending on the pretended application. If it is desired to convey comfort to the body, it will be between 26-30°C, avoiding that the temperature close to the body increases over this limit. To other applications, such as civil construction or automobile industry, PCM of 16 to 22°C are more appropriate. For such situations in which the contact between the material and PCM shouldn't be 'cold', such as application to snow sportswear, the phase change temperature should be between 30 and 36°C or even for protecting footwear or clothes since the temperatures are always above 29°C. On the other hand the 'cool' handle of the PCM of phase change temperature of 26-29°C will be most appreciated for summer clothes.

### Detailed Description of the Invention

### 1. Obtaining the Microcapsules

The PCM microcapsules are obtained by inter-facial polymerization such as described in the literature.

### 2. Obtaining the walls of the microcapsules

The wall of the microcapsules depends on the monomers used in the polymerization reaction. In the case of a wall of melamine-formaldehyde a pre-condensate is used previously prepared from a condensation reaction of one molecule of melamine with 3 molecules of formaldehyde. Some of the amine groups do not react with the form-aldehyde, remaining free. The resulting methylol groups from the reaction of the amine groups with formaldehyde will react between them so as to form a polymeric wall of the microcapsules. Some of these groups will also remain free without reaction. If the monomers are of urea and formaldehyde, a urea-formaldehyde polymer will be obtained, with amine terminal groups. If one of the monomers is glyoxal, then the pre-condensate will be DMHEU, and some of the free groups will be hydroxyl.

To obtain microcapsules with a second wall of PMMA or poly(acrylic acid), a coating can be made on the microcapsules with the polymer using appropriate solvents for the polymer, followed by evaporation of the solvent, for example in a spray-dryer with the subsequent deposition of the polymer around the microcapsules, such as is described in the specialist literature.

### 3. Application of the microcapsules to the fibrous or porous polymeric materials

The microcapsules are applied in an emulsion by padding or by exhaustion, together with the fixing product. As soon as the microcapsules enter the fibrous or porous materials, conditions are created for the reaction to occur between the functional groups of the microcapsules and the bifunctional compounds, such as pH and temperature.

### Example 1 (comparative)

2.5 Kg of microcapsules of PCM with a wall made of polymetacrylic acid and 2.5 Kg of ethlylene glycol diglycidyl ether, were applied by exhaustion in a machine with bath agitation and movement of the material, to a sample of 5 Kg of polyamide jersey knitwear, with a liquor ratio of 1: 10 and at a temperature of 95°C for 30 minutes. The sample was then rinsed and dried at 120°C.

### Example 2 (according to the invention)

2.5 Kg of PCM microcapsules with a wall made of melamine-formaldehyde and 2.5 Kg of 3-glycidoxipropyltrimethoxy silane, were applied by exhaustion, in a machine with bath agitation and movement of the material, to a sample of 5 Kg of 10%n cotton jersey knitwear, with a liquor ratio of 1:10 and at a temperature of 95°C for 30 minutes. The sample was then rinsed and dried at 120°C.

### Example 3 (comparative)

A finishing bath containing 200 g/l of microcapsules of melamine-formaldehyde and 100 g/l of ethylene glycol diglycidyl ether, at pH 11, was applied to a woven fabric of polyester/cotton in a pad-mangle 'foulard', with a pick-up of 100%, with a pressure of 1 bar in the squeeze rollers. Afterwards, the woven fabric goes through a drier/stenter at a temperature of 150°C and a speed of 10 m/minute.

### Example 4 (comparative)

A finishing bath containing 200 g/l of microcapsules of melamine-formaldehyde and 100 g/l of ethylene glycol diglycidyl ether, at pH 11, was applied to a film of porous polyurethane in a pad-mangle 'foulard', with a pick-up of 100%, with a pressure of 1 bar in the squeeze rollers. Afterwards, the woven fabric goes through a drier/stenter at a temperature of 150°C and a speed of 10 m/minute.

### Example 5 (comparative)

A finishing bath containing 200 g/l of microcapsules with a thermoplastic wall of poly-methylmetahcrylate, was applied to a film of porous polyurethane in a pad-mangle 'foulard', with a pick-up of 100%, with a pressure of 1 bar in the squeeze rollers. Afterwards, the woven fabric goes through a drier/stenter at a temperature of 150°C and a speed of 10 m/minute.

## Claims

1. A process for obtaining agglomerates of microcapsules of thermal regulating phase change materials locked within a fibrous material or a porous polymeric material,
the microcapsules, after being applied to the fibrous or porous polymeric material, bound to each other through covalent chemical bonds whilst inside the fibrous material or porous polymeric material, to form agglomerates locked between the fibres, or around the fibres, of the fibrous material, or inside the pores of the porous polymeric material,
wherein a multifunctional reactive compound is used to bind the microcapsules together,
**characterised In that** at least one reactive functional group of the multifunctional binding compound is silane. -Si(OCH₃)₃, reacting by substitution of the -OCH₃ group with a nucleophilic NH₂, OH or carboxylic-COOH group of the microcapsule.

2. The process of claim 1 wherein the agglomerates of microcapsules according to the previous claim, have larger dimensions than the inlet of pores of the fibrous material or the porous polymeric material, wherein they are locked.

3. The process of claim 1 or claim 2 wherein the agglomerates have dimensions between 1 and 10 µm (1 and 10.000 microns).

4. The process of any preceding claim wherein the microcapsules have a wall of a polymer of urea-formaldehyde, urea-formaldehyde-glyoxal, melamine-formaldehyde, polyamide or polyurethane, containing functional groups of amine, NH₂; hydroxyl, -OH; carboxylic, -COOH; or isocyanate, - NCO, adapted to react with reactive functional groups of the multifunctional reactive compound to form the agglomerates.

5. The process of any preceding claim wherein the microcapsules have a second wall of a polymer of polyvinylacrylic acid, polymethacrylic acid, other vinyl polymers that contain functional carboxylic groups, -COOH, or copolymers of these polymers, the carboxylic groups adapted to react with reactive functional groups of the multifunctional reactive compound to form the agglomerates.

6. The process of any preceding claim wherein the thermal regulating phase change material inside the microcapsules is at least one of the following: n-octacosane, n-heptacosane, n- hexacosane, n-pentacosane, n-tetracosane, n-tricosane, n-docosane, n- heneicosane, n-eicosane, n-nonadecane, n-octadecane, n-heptadecane, n- hexadecane, n-pentadecane, n-tetradecane, n-tridecane, n-dodecane.

7. The process of any preceding claim, **characterized in that** the microcapsules are applied by an exhaustion process, together with the multifunctional reactive compound, to the fibrous material or porous polymeric material.

8. The process of any one of claims 1 to 6, wherein the microcapsules are applied by a padding process, together with the multifunctional reactive compound, to the fibrous material or porous polymeric material followed by the passage of the material between two squeezing rollers.

9. The process of any one of claims 1 to 6, wherein the microcapsules, together with the multifunctional reactive compound, are applied to the fibrous material by a spraying process.

10. The use of agglomerates of microcapsules, locked within fibrous material by a process according to any preceding claim, to obtain thermoregulated articles of natural or synthetic fibres, in the form of yarns, woven, knitted or non- woven fabrics, with improved resistance to washing.

## Patentansprüche

1. Verfahren zum Erhalten von Agglomeraten von Mikrokapseln von wärmeregulierenden Phasenwechselmaterialien, die innerhalb eines faserigen Materials oder eines porösen polymeren Materials eingeschlossen sind,
wobei die Mikrokapseln nach Aufbringen auf das faserige oder poröse polymere Material durch kovalente chemische Bindungen aneinander gebunden werden, während sie sich innerhalb des faserigen oder porösen polymeren Materials befinden, zur Bildung von Agglomeraten, die zwischen den Fasern oder um die Fasern des faserigen Materials oder innerhalb der Poren des porösen polymeren Materials eingeschlossen werden,
wobei eine multifunktionelle reaktive Verbindung zum Zusammenbinden der Mikrokapseln verwendet wird,
**dadurch gekennzeichnet, dass** mindestens eine reaktive funktionelle Gruppe der multifunktionellen bindenden Verbindung Silan, -Si(OCH₃)₃, ist, das durch Substitution der - OCH₃-Gruppe mit einer nucleophilen NH₂-, OH- oder Carbonsäure-COOH-Gruppe der Mikrokapsel reagiert.

2. Verfahren nach Anspruch 1, wobei die Agglomerate der Mikrokapseln nach dem vorhergehenden Anspruch größere Dimensionen aufweisen als die Einlassöffnungen von Poren des faserigen Materials oder des porösen polymeren Materials, in dem sie eingeschlossen sind.

3. Verfahren nach Anspruch 1 oder Anspruch 2, wobei die Agglomerate Dimensionen zwischen 1 und 10 µm (1 und 10,000 Mikron) aufweisen.

4. Verfahren nach einem der vorhergehenden Ansprüche, wobei die Mikrokapseln eine Wand aus einem Polymer von Harnstoffformaldehyd, Harnstoffformaldehydglyoxal, Melaminformaldehyd, Polyamid oder Polyurethan aufweisen, die funktionelle Gruppen von Amin, NH₂; Hydroxyl, -OH; Carboxyl, -COOH; oder Isocyanat, -NCO aufweisen, die geeignet sind, mit reaktiven funktionellen Gruppen der multifunktionellen reaktiven Verbindung zur Bildung von Agglomeraten zu reagieren.

5. Verfahren nach einem der vorhergehenden Ansprüche, wobei die Mikrokapseln eine zweite Wand aus einem Polymer von Polyvinylacrylsäure, Polymethacrylsäure, anderen Vinylpolymeren aufweisen, die funktionelle Carbonsäuregruppen, -COOH, oder Copolymere dieser Polymere enthalten, wobei die Carbonsäuregruppen geeignet sind, mit reaktiven funktionellen Gruppen der multifunktionellen reaktiven Verbindung zur Bildung von Agglomeraten zu reagieren.

6. Verfahren nach einem der vorhergehenden Ansprüche, wobei das wärmeregulierende Phasenwechselmaterial innerhalb der Mikrokapseln mindestens eines der Folgenden ist: n-Octacosan, n-Heptacosan, n-Hexacosan, n-Pentacosan, n-Tetracosan, n-Tricosan, n-Docosan, n-Heneicosan, n-Eicosan, n-Nonadecan, n-Octadecan, n-Heptadecan, n-Hexadecan, n-Pentadecan, n-Tetradecan, n-Tridecan, n-Dodean.

7. Verfahren nach einem der vorhergehenden Ansprüche, **dadurch gekennzeichnet, dass** die Mikrokapseln zusammen mit der multifunktionellen reaktiven Verbindung durch ein Exhaustionsverfahren auf das faserige Material oder das poröse polymere Material aufgebracht werden.

8. Verfahren nach einem der Ansprüche 1 bis 6, wobei die Mikrokapseln zusammen mit der multifunktionellen reaktiven Verbindung durch ein Appretierverfahren auf das faserige Material oder das poröse polymere Material aufgebracht werden, gefolgt vom Durchgang des Materials zwischen zwei Quetschwalzen.

9. Verfahren nach einem der Ansprüche 1 bis 6, wobei die Mikrokapseln zusammen mit der multifunktionellen reaktiven Verbindung auf das faserige Material durch ein Spritzverfahren aufgebracht werden.

10. Verwendung von Agglomeraten von Mikrokapseln, die durch ein Verfahren nach einem der vorhergehenden Ansprüche innerhalb von faserigem Material eingeschlossen sind, um wärmeregulierte Artikel aus Natur- oder synthetischen Fasern in Form von Garnen, Geweben, Strick- oder Vliesstoffen mit verbesserter Widerstandsfähigkeit gegen Waschen zu erhalten.

## Revendications

1. Procédé d'obtention d'agglomérats de microcapsules de matériaux à changement de phase, de régulation thermique, bloqués à l'intérieur d'un matériau fibreux ou d'un matériau polymère poreux,
les microcapsules, après avoir été appliquées au matériau polymère fibreux ou poreux, liées les unes aux autres à travers des liaisons chimiques covalentes tout en étant à l'intérieur du matériau fibreux ou du matériau polymère poreux, pour former des agglomérats bloqués entre les fibres, ou autour des fibres, du matériau fibreux, ou à l'intérieur des pores du matériau polymère poreux,
dans lequel un composé réactif multifonctionnel est utilisé pour lier ensemble les microcapsules,
**caractérisé en ce qu'**au moins un groupe fonctionnel réactif du composé de liaison multifonctionnel est le silane, -Si(OCH₃)₃, réagissant par substitution du groupe -OCH₃ avec un groupe nucléophile NH₂, OH ou carboxylique -COOH de la microcapsule.

2. Procédé selon la revendication 1 dans lequel les agglomérats de microcapsules selon la revendication précédente, ont des dimensions plus grandes que l'orifice d'entrée des pores du matériau fibreux ou du matériau polymère poreux, dans lequel ils sont bloqués.

3. Procédé selon la revendication 1 ou la revendication 2 dans lequel les agglomérats ont des dimensions comprises entre 1 et 10 µm (1 et 10 000 microns).

4. Procédé selon l'une quelconque des revendications précédentes dans lequel les microcapsules ont une paroi d'un polymère d'urée-formaldéhyde, d'urée-formaldéhyde-glyoxal, de mélamine-formaldéhyde, de polyamide ou de polyuréthane, contenant des groupes fonctionnels d'amine, NH₂; hydroxyle, -OH; carboxylique, -COOH; ou isocyanate, -NCO, adaptés pour réagir avec les groupes fonctionnels réactifs du composé réactif multifonctionnel pour former les agglomérats.

5. Procédé selon l'une quelconque des revendications précédentes dans lequel les microcapsules ont une seconde paroi d'un polymère de poly(acide vinylacrylique), de poly(acide méthacrylique), d'autres polymères de vinyle qui contiennent des groupes carboxyliques fonctionnels, -COOH, ou des copolymères de ces polymères, les groupes carboxyliques adaptés pour réagir avec les groupes fonctionnels réactifs du composé réactif multifonctionnel pour former les agglomérats.

6. Procédé selon l'une quelconque des revendications précédentes dans lequel le matériau à changement de phase, de régulation thermique à l'intérieur des microcapsules est au moins l'un des suivants: n-octacosane, n-heptacosane, n- hexacosane, n-pentacosane, n-tétracosane, n-tricosane, n-docosane, n- henéicosane, n-éicosane, n-nonadécane, n-octadécane, n-heptadécane, n-hexadécane, n-pentadécane, n-tétradécane, n-tridécane, n-dodécane.

7. Procédé selon l'une quelconque des revendications précédentes, **caractérisé en ce que** les microcapsules sont appliquées par un procédé d'échappement, conjointement au composé réactif multifonctionnel, au matériau fibreux ou au matériau polymère poreux.

8. Procédé selon l'une quelconque des revendications 1 à 6, dans lequel les microcapsules sont appliquées par un procédé de foulardage, conjointement avec un composé réactif multifonctionnel, au matériau fibreux ou au matériau polymère poreux suivi du passage du matériau entre deux rouleaux de pressage.

9. Procédé selon l'une quelconque des revendications 1 à 6, dans lequel les microcapsules, conjointement avec le composé réactif multifonctionnel, sont appliquées au matériau fibreux à l'aide d'un procédé de pulvérisation.

10. Utilisation d'agglomérats de microcapsules, bloqués à l'intérieur du matériau fibreux grâce à un procédé selon l'une quelconque des revendications précédentes, pour obtenir des articles thermorégulés de fibres naturelles ou synthétiques, sous la forme de fils, de textiles tissé, tricoté ou non-tissé, avec une résistance améliorée au lavage.
